(19) Europäisches Patentamt
European Patent Office
Office européen des brevets

(11) EP 4 366 019 A1

(12) EUROPEAN PATENT APPLICATION

(43) Date of publication:
**08.05.2024 Bulletin 2024/19**

(21) Application number: **23207561.4**

(22) Date of filing: **02.11.2023**

(51) International Patent Classification (IPC):
***H01M 10/0525*** *(2010.01)* ***H01M 10/0567*** *(2010.01)*
***H01M 10/0569*** *(2010.01)* ***H01M 10/42*** *(2006.01)*

(52) Cooperative Patent Classification (CPC):
**H01M 10/0567; H01M 10/0525; H01M 10/0569; H01M 10/4235;** H01M 2300/0037

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2022 KR 20220144798**

(71) Applicants:
- **SK On Co., Ltd.**
  **Seoul 03161 (KR)**
- **SK Innovation Co., Ltd.**
  **Seoul 03188 (KR)**

(72) Inventors:
- **PARK, Ki Sung**
  **34124 Daejeon (KR)**
- **SHIN, Sang Hye**
  **34124 Daejeon (KR)**

(74) Representative: **Stolmár & Partner Patentanwälte PartG mbB**
**Blumenstraße 17**
**80331 München (DE)**

# (54) ELECTROLYTE SOLUTION FOR LITHIUM SECONDARY BATTERY AND LITHIUM SECONDARY BATTERY INCLUDING THE SAME

(57) An electrolyte for a lithium secondary battery includes a lithium salt, an organic solvent, and a compound represented by a certain chemical formula. A lithium secondary battery includes a case, an electrode assembly including an anode and a cathode stacked repeatedly and alternately, and the electrolyte solution accommodated in the case together with the electrode assembly.

EP 4 366 019 A1

## Description

BACKGROUND

1. Field

The disclosure of this patent application relates to an electrolyte solution for a lithium secondary battery and a lithium secondary battery including the same. More particularly, the present disclosure relates to an electrolyte solution for a lithium secondary battery including a lithium salt, an organic solvent and an additive, and a lithium secondary battery including the same.

2. Description of the Related Art

A secondary battery which can be charged and discharged repeatedly has been widely employed as a power source of a mobile electronic device such as a camcorder, a mobile phone, a laptop computer.

A lithium secondary battery is advantageous from aspects of high operational voltage and energy density per unit weight, a high charging rate, a compact dimension, etc. Thus, the lithium secondary battery is also applied to a large-scaled device such as an electric vehicle.

For example, the lithium secondary battery may include an electrode assembly including a cathode, an anode and a separator, and an electrolyte solution immersing the electrode assembly.

The cathode may include lithium metal oxide particles in which reversible insertion and desorption of lithium can be implemented as a cathode active material.

Structural deformation of lithium metal oxide particles and side reactions between the lithium metal oxide and the electrolyte solution may occur while repeatedly charging and discharging the lithium secondary battery. Accordingly, life-span properties of the lithium secondary battery may be deteriorated.

For example, the lithium secondary batteries may be exposed to a high-temperature environment during repeated charging/discharging and overcharging, which may cause expansion of the battery, increase of an internal resistance, etc.

SUMMARY

According to an aspect of the present disclosure, there is provided an electrolyte solution for a lithium secondary battery providing improved storage and operational stability.

According to an aspect of the present invention, there is provided a lithium secondary battery having improved storage and operational stability.

An electrolyte solution for a lithium secondary battery includes a lithium salt, an organic solvent and a compound represented by Chemical Formula 1.

[Chemical Formula 1]

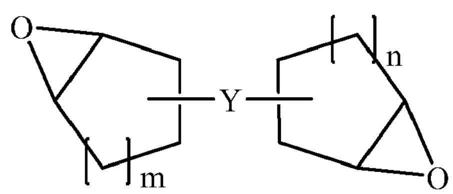

In Chemical Formula 1, Y is a C1-C10 alkylene group or a C2-10 alkenylene group, and m and n are each independently integer of 1 to 3.

In some embodiments, m and n may each be 2.

In some embodiments, the compound represented by Chemical Formula 1 may include a compound represented by Chemical Formula 1-2.

[Chemical Formula 1-2]

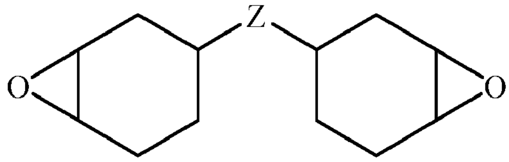

In Chemical Formula 1-2, Z is a C1-C10 alkylene group or a C2-10 alkenylene group.

In some embodiments, Z may be represented by Chemical Formula 2.

[Chemical Formula 2]

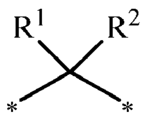

In Chemical Formula 2, $R^1$ and $R^2$ are each independently hydrogen, a C1-C4 alkyl group or a C2-C4 alkenyl group.

In some embodiments, a content of the compound represented by Chemical Formula 1 is in a range from 0.1 wt% to 10 wt% based on a total weight of the electrolyte solution.

In some embodiments, the organic solvent may include at least one selected from the group consisting of a carbonate-based solvent, an ether-based solvent, a ketone-based solvent, an alcohol-based solvent, an ester-based solvent and an aprotic solvent.

In some embodiments, the organic solvent may include a cyclic carbonate-based solvent and a linear carbonate-based solvent.

In some embodiments, in the organic solvent, a ratio of a volume of the cyclic carbonate-based solvent to a volume of the linear carbonate-based solvent may be in a range from 1/9 to 1.

In some embodiments, the electrolyte solution may further include an auxiliary additive that includes at least one selected from the group consisting of a fluorine-containing cyclic carbonate-based compound, a fluorine-containing lithium phosphate-based compound, a sultone-based compound and a cyclic sulfate-based compound.

In some embodiments, in a total weight of the electrolyte solution, a ratio of a content of the auxiliary additive to a content of the compound represented by Chemical Formula 1 may be in a range from 1 to 15.

A lithium secondary battery includes a case, an electrode assembly including an anode and a cathode stacked repeatedly and alternately, and the electrolyte solution for a lithium secondary battery according to the above-described embodiments accommodated in the case together with the electrode assembly.

An electrolyte solution for a lithium secondary battery according to example embodiments may form a solid electrolyte interphase (SEI) on an electrode surface. The SEI may suppress decomposition of an organic solvent in the electrolyte solution during operation of a lithium secondary battery, and may also suppress side reactions between the electrolyte solution and a cathode active material (e.g., lithium metal oxide particles).

A lithium secondary battery according to example embodiments includes the electrolyte solution to have improved life-span and high-temperature storage properties.

BRIEF DESCRIPTION OF THE DRAWINGS

FIG. 1 is a schematic plan view illustrating a lithium secondary battery in accordance with example embodiments.

FIG. 2 is a schematic cross-sectional view illustrating a lithium secondary battery in accordance with example embodiments.

DETAILED DESCRIPTION OF THE EMBODIMENTS

According to example embodiments of the present disclosure, an electrolyte solution for a lithium secondary battery containing a compound represented by Chemical Formula 1 as described below is provided.

According to example embodiments of the present disclosure, a lithium secondary battery including the electrolyte solution is provided.

The term "A-based compound" as used herein refers to a compound containing a functional group or moiety A and a derivative of the compound.

The term "Ca-Cb" as used herein refers to the number of carbon (C) atoms from a to b.

<Electrolyte for Lithium Secondary Battery>

An electrolyte solution for a lithium secondary battery according to embodiments of the present disclosure includes a lithium salt, an organic solvent and a compound represented by Chemical Formula 1 below.

[Chemical Formula 1]

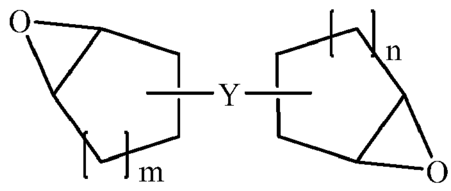

In Chemical Formula 1, Y is a C1-C10 alkylene group or a C2-10 alkenylene group, and m and n may each independently be an integer of 1 to 3.

For example, the compound represented by Chemical Formula 1 may be included as an additive.

For example, the compound represented by Chemical Formula 1 may form a robust solid electrolyte interphase (SEI) on an electrode surface of a lithium secondary battery during operation or storage of the battery. Accordingly, side reactions between the electrolyte solution and an electrode active material may be prevented. Thus, life-span of the lithium secondary battery may be improved. For example, the SEI may be formed on an anode surface.

For example, the compound represented by Chemical Formula 1 may stably form the SEI even at high temperature. Accordingly, high-temperature life-span and storage properties of the lithium secondary battery can be improved.

When Y is a linker group containing a hetero atom such as an ether group, a carbonyl group or ester group, the SEI is formed through decomposition of the compound having a relatively bulky structure to increase a resistance. According to example embodiments of the present disclosure, Y may consist of C and H to avoid the above-described disadvantage and form a low-resistance SEI.

In an embodiment, Y may have a linear structure (straight chain) or a branched structure (branched chain). In the case of the branched structure, the carbon number may be 3 or more.

In an embodiment, Y may be a C1-C6 alkylene group or a C2-C6 alkenylene group.

In one embodiment, Y may be represented by Chemical Formula 2 below.

[Chemical Formula 2]

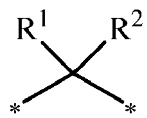

In Chemical Formula 2, $R^1$ and $R^2$ may each independently be hydrogen, a C1-C4 alkyl group, or a C2-C4 alkenyl group, and a bonding hand is indicated as *.

In some embodiments, $R^1$ and $R^2$ may each independently be a C1-C3 alkyl group. In this case, the SEI may be formed more stably at high temperature.

In an embodiment, m and n may each be 2.

In an embodiment, the compound of Chemical Formula 1 may have a symmetrical structure with respect to Y. For example, when Y is represented by Chemical Formula 2, the compound of Chemical Formula 1 may have a symmetrical structure with respect to a carbon atom connected to $R^1$ and $R^2$. In this case, the more robust and uniform SEI layer may be formed.

In an embodiment, the compound of Chemical Formula 1 may include a compound represented by Chemical

Formula 1-2. In this case, the SEI may be formed more stably at high temperature, and the high-temperature life-span and storage properties of the lithium secondary battery may be further improved.

[Chemical Formula 1-2]

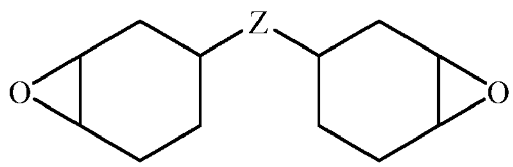

In Chemical Formula 1-2, Z may be a C1-C10 alkylene group or a C2-C10 alkenylene group.

In some embodiments, Z may be a C1-C6 alkylene group or a C2-C6 alkenylene group.

In some embodiments, Z may be represented by Chemical Formula 2 above.

In an embodiment, in Chemical Formulae 1 and 1-2, Y, Z and the alicyclic epoxy group may include a substituent. For example, the substituent may be halogen, a C1-C6 alkyl group, a C2-C6 alkenyl group, a C2-C6 alkynyl group, etc. In some embodiments, the substituent may be halogen or a C1-C3 alkyl group.

In an embodiment, in consideration of more stable formation of the SEI, a content of the compound of Chemical Formula may be 0.1 weight percent (wt%) or more, 0.2 wt% or more, 0.3 wt% or more, 0.4 wt% or more, 0.5 wt% or more, or 1 wt% or more based on a total weight of the electrolyte solution.

In an embodiment, in consideration of facilitating a transfer of lithium ions, the content of the compound of Chemical Formula 1 may be 10 wt% or less, 8 wt% or less, 6 wt% or less, 5 wt% or less, 4 wt% or less, 3 wt% or less, 2 wt% or less, or 1 wt% or less based on a total weight of the electrolyte solution.

In some embodiments, the content of the compound of Chemical Formula 1 may be in a range from 0.1 wt% to 5 wt%, from 0.2 wt% to 3 wt%, or from 0.3 wt% to 2 wt% based on the total weight of the electrolyte solution. Within the above range, the SEI may be formed more stably, and the transfer of lithium ions may be further facilitated.

The electrolyte solution for a lithium secondary battery according to example embodiments may further include an auxiliary additive to further improve a performance of the lithium secondary battery.

In some embodiments, the auxiliary additive may include a fluorine-containing cyclic carbonate-based compound, a fluorine-containing lithium phosphate-based compound, a sultone-based compound, a cyclic sulfate-based compound, etc.

In an embodiment, in consideration of an activity of the compound of Chemical Formula 1, the content of the auxiliary additive may be adjusted to 10% by weight or less, 8% by weight or less, or 6% by weight or less of the total weight of the electrolyte solution.

In one embodiment, a content of the auxiliary additive may be adjusted to be 0.01 wt% or more, 0.03 wt% or more, 0.05 wt% or more, 0.1 wt% or more, 0.3 wt% or more, 0.5 wt% or more, or 1 wt% or more based on the total weight of the electrolyte solution. In the above range, improvements of the performance of the secondary battery may be substantially implemented.

In an embodiment, a ratio of the content of the auxiliary additive to the content of the compound of Chemical Formula 1 in the total weight of the electrolyte solution may be in a range from 0.1 to 20, from 1 to 15, or from 1.5 to 11. In this case, the high temperature storage properties of the lithium secondary battery may be further enhanced.

For example, the fluorine-containing cyclic carbonate-based compound may have a 5-7 membered cyclic structure.

For example, the fluorine-containing cyclic carbonate-based compound may include a fluorine atom directly bonded to a carbon atom in the ring or an alkyl group to which a fluorine atom is bonded (e.g., $-CF_3$).

In some embodiments, the fluorine-containing cyclic carbonate-based compound may be represented by Chemical Formula 3 below.

[Chemical Formula 3]

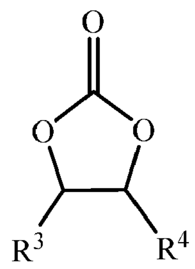

In Chemical Formula 3, $R^3$ and $R^4$ may each independently be hydrogen, halogen, or a C1-C6 alkyl group, and at least one of $R^3$ and $R^4$ may be F.

In some embodiments, the fluorine-containing cyclic carbonate-based compound may include fluoroethylene carbonate (FEC).

In some embodiments, the fluorine-containing cyclic carbonate-based compound may be included in an amount from 0.1 wt% to 5 wt%, from 0.2 wt% to 4 wt%, or from 0.3 wt% to 3 wt% based on the total weight of the electrolyte solution.

For example, the fluorine-containing lithium phosphate-based compound may include a fluorine atom directly bonded to a phosphorus atom or an alkyl group to which a fluorine atom is bonded (e.g., $-CF_3$).

In some embodiments, the fluorine-containing phosphate-based compound may be represented by Chemical Formula 4 below.

[Chemical Formula 4]

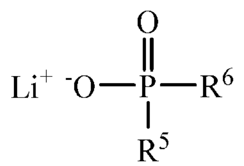

In Chemical Formula 4, $R^5$ and $R^6$ may each independently be halogen or a C1-C6 alkyl group, and at least one of $R^5$ and $R^6$ may be F.

In some embodiments, the fluorine-containing lithium phosphate-based compound may include lithium difluorophosphate ($LiPO_2F_2$), lithium tetrafluoroxalate phosphate, lithium difluoro(bisoxalato)phosphate, etc.

In some embodiments, the fluorine-containing lithium phosphate-based compound may be included in an amount from 0.1 wt% to 2 wt%, from 0.2 wt% to 1.5 wt%, or from 0.3 wt% to 1 wt% based on the total weight of the electrolyte solution.

For example, the sultone-based compound may have a 5 to 7-membered cyclic structure.

In some embodiments, the sultone-based compound may be represented by Chemical Formula 5 below.

[Chemical Formula 5]

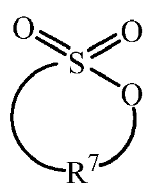

In Chemical Formula 5, $R^7$ may be a C2-C5 alkylene group or a C3-C5 alkenylene group.

In some embodiments, the sultone-based compound may include at least one of an alkyl sultone-based compound and an alkenyl sultone-based compound.

In some embodiments, the sultone-based compound may include both the alkyl sultone-based compound and the alkenyl sultone-based compound.

For example, the alkyl sultone-based compound may have only a saturated bond within a ring, and the alkenyl

sultone-based compound may have an unsaturated bond (e.g., a C=C double bond) within a ring.

In some embodiments, the alkyl sultone-based compound may include 1,3-propane sultone (PS), 1,4-butane sultone, etc.

In some embodiments, the alkenyl sultone-based compound may include ethenesultone, 1,3-propene sultone (PRS), 1,4-butene sultone, 1-methyl-1,3-propene sultone, etc.

In some embodiments, the sultone-based compound may be included in an amount from 0.1 wt% to 2 wt%, from 0.2 wt% to 1.5 wt%, or from 0.3 wt% to 1 wt% based on the total weight of the electrolyte solution.

For example, the cyclic sulfate-based compound may have a 5 to 7 membered cyclic structure.

In some embodiments, the cyclic sulfate-based compound may be represented by Chemical Formula 6 below.

[Chemical Formula 6]

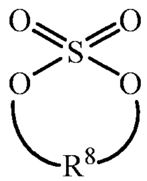

In Chemical Formula 6, $R^8$ may be a C2-C5 alkylene group.

In some embodiments, the cyclic sulfate-based compound may include ethylene sulfate (ESA), trimethylene sulfate (TMS), methyltrimethylene sulfate (MTMS), etc.

In some embodiments, the cyclic sulfate-based compound may be included in an amount from 0.1 wt% to 2 wt%, from 0.2 wt% to 1.5 wt%, or from 0.3 wt% to 1 wt% based on the total weight of the electrolyte solution.

The organic solvent may include an organic compound having sufficient solubility for the lithium salt, the additive and having substantially no reactivity in a lithium secondary battery. For example, the electrolyte solution may be a non-aqueous electrolyte solution.

In an embodiment, the organic solvent may include at least one selected from the group consisting of a carbonate-based solvent, an ether-based solvent, a ketone-based solvent, an alcohol-based solvent, an ester-based (a carboxylate-based) solvent and an aprotic solvent.

In an embodiment, the organic solvent may include the carbonate-based solvent, and the carbonate-based solvent may include a linear carbonate-based solvent and a cyclic carbonate-based solvent.

For example, the linear carbonate-based solvent may include dimethyl carbonate (DMC), ethyl methyl carbonate (EMC), diethyl carbonate (DEC), methyl propyl carbonate, ethyl propyl carbonate, dipropyl carbonate, etc.

For example, the cyclic carbonate-based solvent may include ethylene carbonate (EC), propylene carbonate (PC), butylene carbonate, etc.

In some embodiments, an amount of the linear carbonate-based solvent is greater than that of the cyclic carbonate-based solvent in the organic solvent by a volume basis.

In some embodiments, in the organic solvent, a ratio of a volume of the cyclic carbonate-based solvent to a volume of the linear carbonate-based solvent may be in a range from 1/9 to 1, or from 2/3 to 1/4.

For example, the ether-based solvent may include dibutyl ether, tetraethylene glycol dimethyl ether (TEGDME), diethylene glycol dimethyl ether (DEGDME), dimethoxyethane, tetrahydrofuran (THF), 2-methyltetrahydrofuran, etc.

For example, the ketone-based solvent may include cyclohexanone.

For example, the alcohol-based solvent may include ethyl alcohol, isopropyl alcohol, etc.

In some embodiments, the ester-based solvent may include methyl acetate (MA), ethyl acetate (EA), n-propyl acetate (n-PA), 1,1-dimethylethyl acetate (DMEA), methyl propionate (MP), ethyl propionate (EP), etc.

For example, the aprotic solvent may include a nitrile-based solvent, an amide-based solvent (e.g., dimethylformamide), a dioxolane-based solvent (e.g., 1,3-dioxolane), a sulfolane-based solvent, etc. These may be used alone or in a combination of two or more therefrom

The lithium salt may be expressed as $Li^+X^-$.

For example, the anion $X^-$ may be any one selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$ , etc.

In some embodiments, the lithium salt may include $LiBF_4$, $LiPF_6$, etc.

For example, the lithium salt may be included in a concentration from 0.01 M to 5 M or from 0.01 M to 2 M in the organic solvent. In the above concentration range, transfer of lithium ions and/or electrons may be facilitated during

charging and discharging of the lithium secondary battery.

<Lithium Secondary Battery>

FIGS. 1 and 2 are a schematic top planar view and a schematic cross-sectional view, respectively, illustrating a lithium secondary battery in accordance with exemplary embodiments. Specifically, FIG. 2 is a cross-sectional view taken along a line I-I' of FIG. 1.

Constructions of the secondary battery are schematically illustrated in FIGS. 1 and 2 for convenience of descriptions, and the secondary battery of the present disclosure is not limited to the shape/structure illustrated in FIGS. 1 and 2.

Referring to FIGS. 1 and 2, a lithium secondary battery may include a cathode 100 and an anode 130 facing the anode 100.

For example, the cathode 100 may include a cathode current collector 105 and a cathode active material layer 110 on the cathode current collector 105.

For example, the cathode active material layer 110 includes a cathode active material, and may further include a cathode binder and a conductive material.

For example, a slurry may be prepared by mixing and stirring the cathode active material with the cathode binder, the conductive material and/or a dispersive agent in a solvent. The slurry may be coated on the cathode current collector 105, and then dried and pressed to form the cathode 100.

The cathode current collector 105 may include, e.g., stainless steel, nickel, aluminum, titanium, copper or an alloy thereof.

For example, the cathode active material may include lithium metal oxide particles capable of implementing reversible insertion and desorption of lithium ions.

In an embodiment, the cathode active material may include lithium metal oxide particles containing nickel.

In some embodiments, the lithium metal oxide particles may contain 80 mol% or more of nickel based on the total number of moles of all elements excluding lithium and oxygen. Within the above range, the lithium secondary battery having high capacity may be more effectively achieved.

In some embodiments, the lithium metal oxide particles may contain 83 mol% or more, 85 mol% or more, 88 mol% or more, 90 mol% or more, or 95 mol% or more of nickel based on the total number of moles of all elements excluding lithium and oxygen.

As a concentration of nickel in the lithium metal oxide particle increases, structural stability of the lithium metal oxide particle may be degraded during operation of the lithium secondary battery (e.g., cracks may be increased due to an increase of a volume change in c-axis). Accordingly, side reactions between the lithium metal oxide particle and the electrolyte solution may be increased, and the life-span properties and high-temperature stability of the lithium secondary battery may be deteriorated.

However, the electrolyte solution for a lithium secondary battery according to embodiments of the present disclosure may be applied, so that degradation of the life-span properties and high-temperature stability of the lithium secondary battery may be effectively suppressed.

In some embodiments, the lithium metal oxide particle may further include at least one of cobalt and manganese.

In some embodiments, the lithium metal oxide particle may further include cobalt and manganese. In this case, the lithium secondary battery having improved power properties and penetration stability may be implemented.

In one embodiment, the lithium metal oxide particle may be represented by Chemical Formula 7 below.

[Chemical Formula 7] $Li_xNi_{(1-a-b)}Co_aM_bO_y$

In Chemical Formula 7, M may include at least one of Al, Zr, Ti, Cr, B, Mg, Mn, Ba, Si, Y, W and Sr, $0.9 \leq x \leq 1.2$, $1.9 \leq y \leq 2.1$, and $0 < a + b \leq 0.2$.

In some embodiments, $0<a+b\leq0.17$, $0<a+b\leq0.15$, $0<a+b\leq0.12$, $0<a+b\leq0.1$, or $0<a+b\leq0.05$ in Chemical Formula 7.

In an embodiment, the lithium metal oxide particle may further include a coating element or a doping element. For example, the coating element or doping element may include Al, Ti, Ba, Zr, Si, B, Mg, P, Sr, W, La, an alloy thereof, or an oxide thereof. In this case, the lithium secondary battery having improved life-span properties may be effectively implemented.

For example, the cathode binder may include an organic based binder such as polyvinylidenefluoride (PVDF), a polyvinylidene fluoride-hexafluoropropylene copolymer (PVDF-co-HFP), polyacrylonitrile, polymethylmethacrylate, etc., or an aqueous based binder such as styrene-butadiene rubber (SBR) that may be used with a thickener such as carboxymethyl cellulose (CMC).

For example, the conductive material may include a carbon-based material such as graphite, carbon black,

graphene, carbon nanotube, etc., and/or a metal-based material such as tin, tin oxide, titanium oxide, a perovskite material such as $LaSrCoO_3$ or $LaSrMnO_3$, etc.

The anode 130 may include an anode current collector 125 and an anode active material layer 120 on the anode current collector 125.

For example, the anode active material layer 120 includes an anode active material and, and may further include an anode binder and a conductive material.

For example, an anode slurry may be prepared by mixing and stirring the anode active material with the anode binder, the conductive material and/or a dispersive agent in a solvent. The slurry may be coated on the anode current collector 125, and then dried and pressed to form the anode 130.

In an embodiment, the anode current collector 125 may include gold, stainless steel, nickel, aluminum, titanium, copper, or an alloy thereof, and may include, e.g., copper or a copper alloy.

The anode active material may include a material which may be capable of adsorbing and ejecting lithium ions. For example, the anode active material may include a lithium alloy, a carbon-based material, a silicon-based compound, etc.

The lithium alloy may further include aluminum, zinc, bismuth, cadmium, antimony, silicon, lead, tin, gallium, indium, etc.

For example, the carbon-based active material may include a crystalline carbon, an amorphous carbon, a carbon composite, a carbon fiber, etc.

The amorphous carbon may include a hard carbon, coke, a mesocarbon microbead (MCMB), a mesophase pitch-based carbon fiber (MPCF), etc. The crystalline carbon may include a graphite-based material such as natural graphite, artificial graphite, graphitized coke, graphitized MCMB, graphitized MPCF, etc.

In an embodiment, the anode active material may include the silicon-based active material. For example, the silicon-based active material may include Si, SiOx ($0<x<2$), Si/C, SiO/C, a Si-Metal, etc. In this case, the lithium secondary battery having higher capacity may be implemented.

In some embodiments, a content of silicon atoms in the anode active material may be in a range from 1 wt% to 20 wt%, from 1 wt% to 15 wt%, or from 1 wt% to 10 wt%.

The anode binder and conductive material may be substantially the same as or similar to the cathode binder and the conductive material as described above. For example, the anode binder may include an aqueous binder such as styrene-butadiene rubber (SBR). For example, the anode binder may be used with a thickener such as carboxymethyl cellulose (CMC).

In some embodiments, an area of the anode 130 may be larger than an area of the cathode 100. In this case, transfer of lithium ions generated from the cathode 100 to the anode 130 may be facilitated0 without being precipitated.

For example, the cathode 100 and the anode 130 may be alternately and repeatedly arranged to form an electrode assembly 150.

In some embodiments, a separation layer 140 may be interposed between the cathode 100 and the anode 130. For example, the electrode assembly 150 may be formed by winding, stacking, z-folding, etc., of the separation layer 140.

The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

The lithium secondary battery according to exemplary embodiments may include a cathode lead 107 connected to the cathode 100 to protrude to an outside of a case 160, and an anode lead 127 connected to the anode 130 to protrude to the outside of the case 160.

The cathode current collector 105 may include a protrusion (a cathode tab, not illustrated) at one side thereof. The cathode active material layer 110 may not be formed on the cathode tab. The cathode tab 106 may be integral with the cathode current collector 105 or may be connected to the cathode current collector 105 by, e.g., welding. The cathode current collector 105 and the cathode lead 107 may be electrically connected via the cathode tab.

The anode current collector 125 may include a protrusion (an anode tab, not illustrated) at one side thereof. The anode active material layer 120 may not be formed on the anode tab. The anode tab may be integral with the anode current collector 125 or may be connected to the anode current collector 125 by, e.g., welding. The anode electrode current collector 125 and the anode lead 127 may be electrically connected via the anode tab.

The electrode assembly 150 may include a plurality of the cathodes and a plurality of the anodes. Each of the plurality of the cathodes may include the cathode tab. Each of the plurality of the anodes may include the anode tab.

For example, the cathode tabs (or the anode tabs) may be laminated, pressed and welded to form a cathode tab stack (or an anode tab stack). The cathode tab stack may be electrically connected to the cathode lead 107. The anode tab stack may be electrically connected to the anode lead 127.

The electrode assembly 150 may be accommodated together with an electrolyte solution according to embodiments of the present disclosure in the case 160 to form the lithium secondary battery.

The lithium secondary battery may be fabricated into a cylindrical shape using a can, a prismatic shape, a pouch shape, a coin shape, etc.

Hereinafter, preferred embodiments are proposed to more concretely describe the present inventive concepts. However, the following examples are only given for illustrating the present invention and those skilled in the related art will obviously understand that various alterations and modifications are possible within the scope and spirit of the present invention. Such alterations and modifications are duly included in the appended claims.

[Examples and Comparative Examples]

(1) Preparation of electrolyte solution

A 1 M $LiPF_6$ solution was prepared using a mixed solvent of ethylene carbonate (EC), ethyl methyl carbonate (EMC) and diethyl carbonate (DEC) in a volume ratio of 25:45:30.

Additives and auxiliary additives were added to the $LiPF_6$ solution by amounts shown in Table 1 below based on a total weight (100 wt%) of an electrolyte solution to prepare the electrolyte solutions of Examples and Comparative Examples.

(2) Fabrication of lithium secondary battery samples

A cathode slurry was prepared by dispersing $Li[Ni_{0.88}C_{O0.06}Mn_{0.06}]O_2$, carbon black and PVDF in NMP in a weight ratio of 98: 1: 1.

The cathode slurry was uniformly coated on an area except for a protrusion (cathode tab) of an aluminum foil (thickness: 15 μm) having the protrusion at one side thereof, dried and pressed to prepare a cathode.

An anode active material including artificial graphite and natural graphite in a weight ratio of 7:3, styrene-butadiene rubber (SBR), and carboxymethyl cellulose (CMC) were dispersed in water by a weight ratio of 94:3:3 to an anode slurry

The anode slurry was uniformly coated applied on an area except for a protrusion (anode tab) of a copper foil (thickness: 15 μm) having the protrusion at one side thereof, dried and pressed to prepare an anode.

An electrode assembly was formed by interposing a polyethylene separator (thickness: 20 μm) between the cathode and the anode. A cathode lead and an anode lead were welded and connected to a cathode tab and an anode tab, respectively.

The electrode assembly was stored within an inside of a pouch (case) so that portions of the anode lead and the cathode lead were exposed to an outside, and three sides except for an electrolyte injecting side were sealed.

The electrolyte solution prepared in the above (1) above was injected into the pouch, and the electrolyte injecting side was also sealed to prepare a lithium secondary battery sample.

[Table 1]

| | additive | auxiliary additive (wt%) | | | | |
|---|---|---|---|---|---|---|
| | | $LiPO_2F_2$ | FEC | PS | PRS | ESA |
| Example 1 | A, 0.5wt% | 1.0 | 3.0 | 0.5 | 0.5 | 0.5 |
| Example 2 | A, 1.0wt% | 1.0 | 3.0 | 0.5 | 0.5 | 0.5 |
| Comparative Example 1 | - | 1.0 | 3.0 | 0.5 | 0.5 | 0.5 |
| Comparative Example 2 | B, 0.5wt% | 1.0 | 3.0 | 0.5 | 0.5 | 0.5 |
| $LiPO_2F_2$: Lithium difluorophosphate<br>FEC: fluoroethylene carbonate<br>PS: 1,3-propane sultone<br>PRS: 1,3-propene sultone<br>ESA: ethylene sulfate | | | | | | |

A: compound of Chemical Formula 1-3 below

[Chemical Formula 1-3]

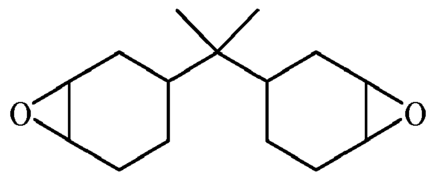

B: compound of Chemical Formula 8 below

[Chemical Formula 8]

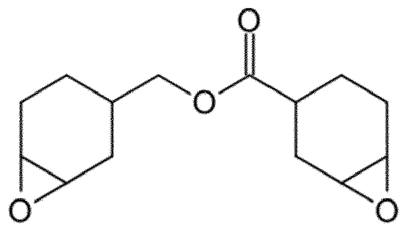

<Experimental Example>

1. Evaluation on initial performance

The lithium secondary batteries of Examples and Comparative Examples were repeatedly charged (CC-CV 0.5C 4.2V 0.05C CUT-OFF) and discharged (CC 0.5C 3.0V CUT-OFF) three times at 25 °C, and then charged to SOC (State of Charge) 60% at 25°C.

At the SOC 60% point, the C-rate was changed to 0.2C, 0.5C, 1.0C, 1.5C, 2.0C and 2.5C, and discharge and supplementary charge were performed for 10 seconds at each rate. Voltages during the discharge and supplementary charge were plotted and a slope was adopted as a DCIR.

2. Evaluation on low temperature performance

(1) Evaluation on low-temperature capacity

The lithium secondary batteries of Examples and Comparative Examples were repeatedly charged (CC-CV 0.5C 4.2V 0.05C CUT-OFF) and discharged (CC 0.5C 3.0V CUT-OFF) three times at -10°C, and then a discharge capacity was measured.

(2) Evaluation on low-temperature DCIR

The lithium secondary batteries of Examples and Comparative Examples were charged to SOC (State of Charge) 60% at -10°C.

At the SOC 60% point, the C-rate was changed to 0.2C, 0.5C, 1.0C, 1.5C, 2.0C, and 2.5C, and discharge and supplementary charge were performed for 10 seconds at each rate. Voltages during the discharge and supplementary charge were plotted and a slope was adopted as a DCIR.

3. Evaluation on high-temperature storage performance

(1) Evaluation on high temperature (60 °C) storage discharge capacity retention

1) The lithium secondary batteries of Examples and Comparative Examples were subjected to 0.5C CC/CV charging

(4.2V, 0.05C CUT-OFF) and 0.5C CC discharging (2.7V CUT-OFF) three times at 25°C, and then a discharge capacity C1 was measured. Thereafter, the lithium secondary batteries were stored at 60°C for 12 weeks, left at room temperature for an additional 30 minutes, and a discharge capacity C2 was measured after 0.5C CC discharge (2.75V CUT-OFF).

According to Equation 3-1 below, a high-temperature storage discharge capacity retention of each battery of Examples and Comparative Examples was calculated.

[Equation 3-1]

$$\text{High-temperature storage discharge capacity retention (\%)} = C2/C1 \times 100\ (\%)$$

(2) Evaluation on battery thickness increase ratio after high temperature (60 °C) storage

1) After charging the lithium secondary battery of each of Examples and Comparative Examples at 0.5C CC/CV (4.2V 0.05C CUT-OFF) at 25°C, a battery thickness T1 was measured using a plate thickness measuring device (Mitutoyo, 543-490B).

The charged lithium secondary battery was exposed to an air at 60°C for 12 weeks, and then a battery thickness T2 was measured using the plate thickness measuring device (Mitutoyo, 543-490B).

According to Equation 3-2 below, a thickness increase ratio after high-temperature storage was calculated.

[Equation 3-2]

$$\text{Battery thickness increase ratio after high-temperature storage (\%)} = (T2-T1)/T1 \times 100\ (\%)$$

[Table 2]

| | Example 1 | Example 2 | Comparative Example 1 | Comparative Example 2 |
|---|---|---|---|---|
| initial DCIR (mΩ) | 31.2 | 31.4 | 31.6 | 31.4 |
| low temperature discharge capacity (mAh) | 1568 | 1553 | 1573 | 1547 |
| low temperature DCIR (mΩ) | 127.9 | 130.4 | 126.7 | 132.2 |
| high temperature discharge capacity retention (%) | 79.5 | 80.7 | 78.7 | 80.6 |
| battery thickness increase ratio after high temperature storage (%) | 169.5 | 145.2 | 175.0 | 163.9 |

Referring to Table 2, in the lithium secondary batteries of Example 1, Example 2 and Comparative Example 2, the thickness increase ratio after storage at high temperature was reduced compared to that of the lithium secondary battery of Comparative Example 1.

The lithium secondary battery of Example 1 provided relatively degraded high-temperature storage discharge capacity retention and high-temperature storage thickness increase ratio compared to that from the lithium secondary battery of Comparative Example 2, but improved initial DCIR, low-temperature discharge capacity and low-temperature DCIR were provided.

The lithium secondary battery of Example 2 provided improved low-temperature performance and high-temperature storage performance compared to that from the lithium secondary battery of Comparative Example 2.

The lithium secondary batteries of Examples 1 and 2 contained the compound of the above-described Chemical Formula 1 to suppress side reactions between the electrolyte solution and the lithium metal oxide particles while reducing the amount of gas generation.

For example, the compound of Chemical Formula 1 has a lower molar mass than the compound of Chemical Formula 2 included in the lithium secondary battery of Comparative Example 2. Thus, even when the content of the compound of Chemical Formula 1 is increased, resistance increase may be suppressed. Additionally, the compound of Chemical Formula 1 has a low oxygen content to remarkably reduce the amount of gas generation.

## Claims

**1.** An electrolyte solution for a lithium secondary battery, comprising:

a lithium salt;
an organic solvent; and
a compound represented by Chemical Formula 1:

[Chemical Formula 1]

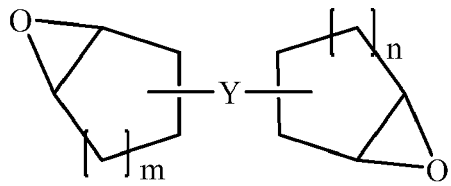

wherein, in Chemical Formula 1, Y is a C1-C10 alkylene group or a C2-10 alkenylene group, and m and n are each independently integer of 1 to 3.

**2.** The electrolyte solution for a lithium secondary battery according to claim 1, wherein m and n are each 2.

**3.** The electrolyte solution for a lithium secondary battery according to claim 1 or claim 2, wherein the compound represented by Chemical Formula 1 includes a compound represented by Chemical Formula 1-2:

[Chemical Formula 1-2]

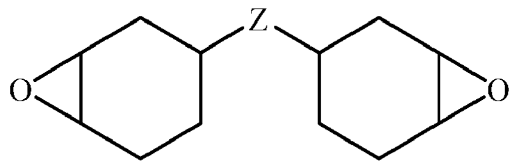

wherein, in Chemical Formula 1-2, Z is a C1-C10 alkylene group or a C2-10 alkenylene group.

**4.** The electrolyte solution for a lithium secondary battery according to claim 3, wherein Z is represented by Chemical Formula 2:

[Chemical Formula 2]

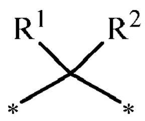

wherein, in Chemical Formula 2, $R^1$ and Rare each independently hydrogen, a C1-C4 alkyl group or a C2-C4 alkenyl

group.

5. The electrolyte solution for a lithium secondary battery according to any one of claims 1 to 4, wherein a content of the compound represented by Chemical Formula 1 is in a range from 0.1 wt% to 10 wt% based on a total weight of the electrolyte solution.

6. The electrolyte solution for a lithium secondary battery according to any one of claims 1 to 5, wherein the organic solvent includes at least one selected from the group consisting of a carbonate-based solvent, an ether-based solvent, a ketone-based solvent, an alcohol-based solvent, an ester-based solvent and an aprotic solvent.

7. The electrolyte solution for a lithium secondary battery according to any one of claims 1 to 6, wherein the organic solvent includes a cyclic carbonate-based solvent and a linear carbonate-based solvent.

8. The electrolyte solution for a lithium secondary battery according to claim 7, wherein, in the organic solvent, a ratio of a volume of the cyclic carbonate-based solvent to a volume of the linear carbonate-based solvent is in a range from 1/9 to 1.

9. The electrolyte solution for a lithium secondary battery according to any one of claims 1 to 8, further comprising an auxiliary additive that includes at least one selected from the group consisting of a fluorine-containing cyclic carbonate-based compound, a fluorine-containing lithium phosphate-based compound, a sultone-based compound and a cyclic sulfate-based compound.

10. The electrolyte solution for a lithium secondary battery according to claim 9, wherein, in a total weight of the electrolyte solution, a ratio of a content of the auxiliary additive to a content of the compound represented by Chemical Formula 1 is in a range from 1 to 15.

11. A lithium secondary battery, comprising:

a case;
an electrode assembly comprising an anode and a cathode stacked repeatedly and alternately; and
the electrolyte solution for a lithium secondary battery of any one of claims 1 to 10 accommodated in the case together with the electrode assembly.

FIG. 1

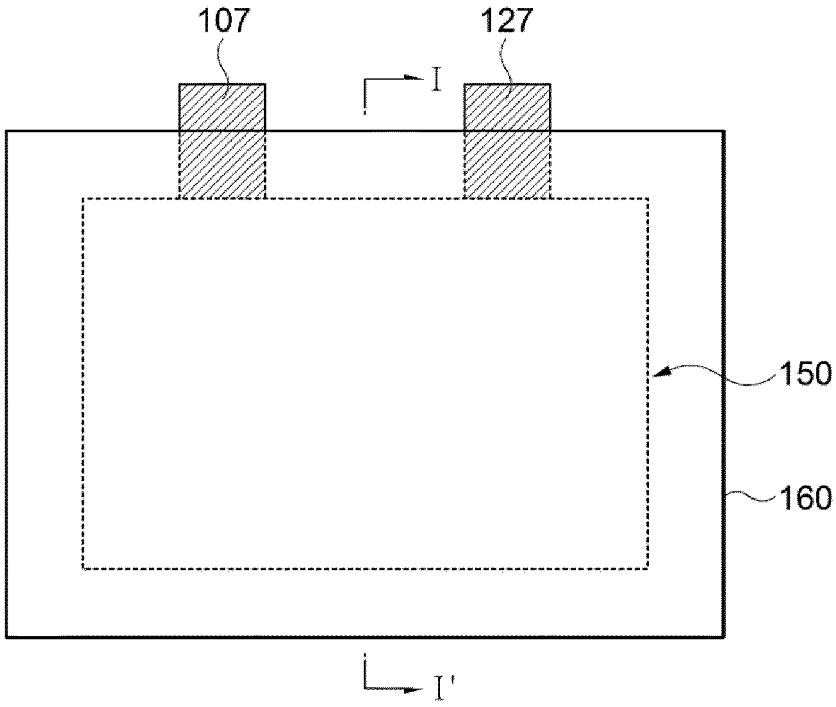


FIG. 2

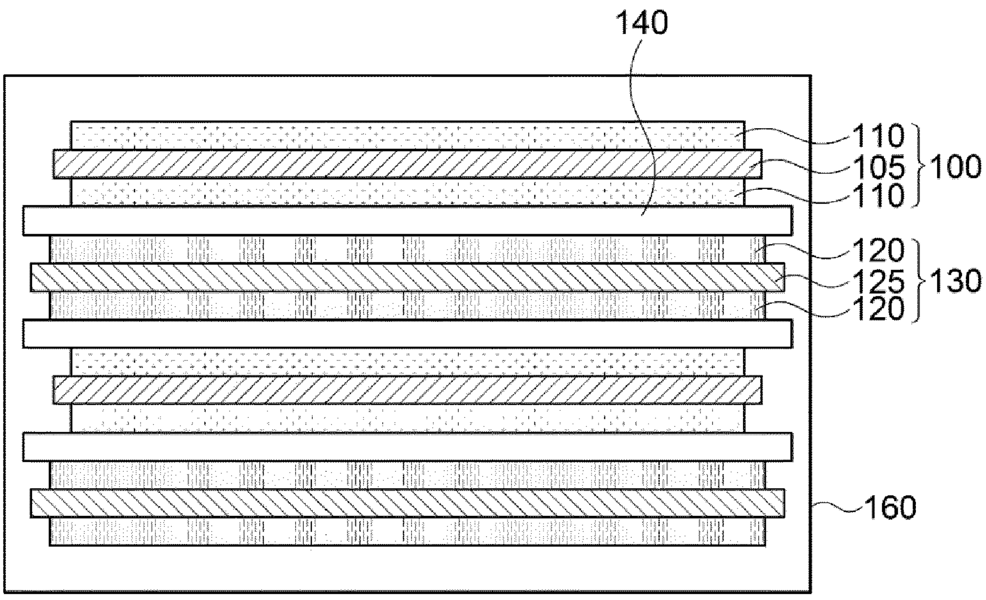

Europäisches Patentamt
European Patent Office
Office européen des brevets

# EUROPEAN SEARCH REPORT

Application Number
EP 23 20 7561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2015 046247 A (SEKISUI CHEMICAL CO LTD) 12 March 2015 (2015-03-12) * claim 2; example 1; compounds B-1 * ----- | 1-11 | INV. H01M10/0525 H01M10/0567 H01M10/0569 H01M10/42 |
| A | JP 2001 250584 A (TOSHIBA CORP) 14 September 2001 (2001-09-14) * paragraphs [0075], [0076] * ----- | 1-11 | |

TECHNICAL FIELDS SEARCHED (IPC)
H01M

The present search report has been drawn up for all claims

| Place of search | Date of completion of the search | Examiner |
|---|---|---|
| Munich | 19 March 2024 | Steinreiber, J |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 20 7561

This annex lists the patent family members relating to the patent documents cited in the above-mentioned European search report. The members are as contained in the European Patent Office EDP file on The European Patent Office is in no way liable for these particulars which are merely given for the purpose of information.

19-03-2024

| Patent document cited in search report | Publication date | Patent family member(s) | Publication date |
|---|---|---|---|
| JP 2015046247 A | 12-03-2015 | JP 6159199 B2 | 05-07-2017 |
| | | JP 2015046247 A | 12-03-2015 |
| JP 2001250584 A | 14-09-2001 | JP 3552209 B2 | 11-08-2004 |
| | | JP 2001250584 A | 14-09-2001 |

EPO FORM P0459

For more details about this annex : see Official Journal of the European Patent Office, No. 12/82